# EUROPEAN PATENT APPLICATION

(11) **EP 1 073 090 A2**
(43) Date of publication of application: **31.01.2001**
(21) Application number: 00305791.6
(22) Date of filing: 07.07.2000
(51) Int. Cl.: H01J 31/12, H01J 9/02

(54) **Field emission display device using carbon nanotubes and manufacturing method thereof**

(30) Priority: 27.07.1999 KR 9930698; 31.05.2000 KR 0029579
(71) Applicant: Iljin Nanotech Co., Ltd., Seoul (KR)
(72) Inventor: Lee, Cheol-Jin, Gunsan-City, Jeonlabuk-do (KR); Yoo, Jae-Eun, Seongbuk-gu, Seoul (KR)
(74) Representative: Browne, Robin Forsythe, Dr.

(57) **Abstract**

A field emission display device, and a manufacturing method thereof are provided. In the field emission display device, a first metal film for use as a cathode is formed on a lower substrate. A dielectric film pattern and a second metal film pattern are formed on the first metal film, each of which has a plurality of fine holes which expose the first metal film. Each of the fine holes can have a diameter of 0.5 to 10.0 µm. A conductive high polymer film is formed within the fine holes. Carbon nanotubes for use as emitter tips are vertically arranged within the conductive high polymer film. A spacer is installed on the second metal film pattern. An upper substrate, to which a transparent electrode and a fluorescent material are attached, is positioned on the spacer. Accordingly, the FED device using carbon nanotubes can be simply manufactured with a large area by a method of forming fine holes in a second metal film and a dielectric film and putting carbon nanotubes in the fine holes.

## Description

### BACKGROUND OF THE INVENTION

### 1. Field of the Invention

The present invention relates to a field emission display (FED) device and a manufacturing method thereof, and more particularly, to an FED device using carbon nanotubes and a manufacturing method thereof.

### 2. Description of the Related Art

In general field emission display (FED) devices, when several hundreds of positive volts are applied to an external gate electrode with respect to a conic silicon emitter tip, electrons are emitted from the end portion of the emitter tip affected by a strong electric field, and the emitted electrons collide with an anode to which several kilovolts to several hundreds of kilovolts are applied and which is coated with a fluorescent material. In this way, the FED devices act as display devices. However, in a conventional FED device using silicon emitter tips, which are made by etching a silicon substrate, there is difficulty in separating an anode from a cathode at a fine interval of about 1.0 to 1.5nm. Also, in a conventional FED device, leakage current is high, the reliability and performance are degraded, and a manufacturing yield is low, due to deterioration of silicon tips caused by a very high operating voltage and a high current emission. An FED device using carbon nanotubes has been proposed as an improvement on the FED device using silicon emitter tips.

Conventional carbon nanotubes are synthesized by an electrical discharge method or a laser deposition method, and put in a cleaning solution and shaken by an ultrasonic washer to be refined. The refined carbon nanotubes are implanted into the pores of a porous ceramic filter to apply the refined carbon nanotubes to an FED device. Then, the carbon nanotubes contained in the pores of the porous ceramic filter are stamped and stood upright on conductive polymer on a lower substrate for an FED device, thereby forming emitter tips.

The FED device using conventional carbon nanotubes as an emitter tip excels in stability compared to an FED device using silicon emitter tips. However, the FED device using conventional carbon nanotubes has difficulty in efficiently standing carbon nanotubes on the conductive polymer, and its manufacturing method is complicated. Thus, the FED device using conventional carbon nanotubes has a low manufacturing yield, and cannot be manufactured to have a large area.

### SUMMARY OF THE INVENTION

An objective of the present invention is to provide a field emission display (FED) device using carbon nanotubes, which can be manufactured to have a large area, and which has a high density of tips per unit area.

Another objective of the present invention is to provide a method of manufacturing an FED device which can be manufactured to have a large area by a simple manufacturing process.

Accordingly, to achieve the first objective, the present invention provides a field emission display device including a first metal film for use as a cathode formed on a lower substrate; and a dielectric film pattern and a second metal film pattern formed on the first metal film, each of which has a plurality of fine holes which expose the first metal film. The lower substrate can be formed of glass, quartz, silicon or alumina (Al₂O₃). The first metal film can be formed of chrome, titanium, tungsten or aluminum, and the second metal film pattern can be formed of chrome, titanium or palladium. Each of the fine holes can have a diameter of 0.5 to 10.0 µm. A conductive high polymer film is formed within the fine holes. Carbon nanotubes for use as emitter tips are vertically arranged within the conductive high polymer film. A spacer is installed on the second metal film pattern. An upper substrate, to which a transparent electrode and a fluorescent material are attached, is positioned on the spacer.

To achieve the second objective, the present invention provides a method of manufacturing a field emission display device. In this method, a first metal film for use as a cathode is formed on a lower substrate. A dielectric film is formed on the first metal film. A second metal film for use as a gate electrode is formed on the dielectric film. A dielectric film pattern and a second metal film pattern, each of which has a plurality of fine holes which expose the first metal film, are formed by patterning the second metal film and the dielectric film. A liquid conductive high polymer film is formed within the fine holes. Carbon nanotubes for use as emitter tips are sprayed into the fine holes and vertically arranged. Here, the carbon nanotubes are stood upright within the fine holes by ultrasonic vibration or voltage application. The liquid conductive high polymer film is cured, and then a spacer is installed on the second metal film pattern. An upper substrate, having a transparent electrode and a fluorescent material attached thereto, is attached to the spacer.

An FED device using carbon nanotubes according to the present invention as described above can be simply manufactured to have a large area by a method of forming fine holes in a second metal film and a dielectric film and putting carbon nanotubes into the fine holes.

### BRIEF DESCRIPTION OF THE DRAWINGS

The above objectives and advantages of the present invention will become more apparent by describing in detail a preferred embodiment thereof with reference to the attached drawings in which:
FIG. 1 is a cross-sectional view of a field emission display (FED) device using carbon nanotubes according to the present invention; and
FIGS. 2 through 4 are cross-sectional views illustrating a method of manufacturing the FED display of FIG. 1.

### DESCRIPTION OF THE PREFERRED EMBODIMENT

Hereinafter, an embodiment of the present invention will be described in detail with reference to the attached drawings. However, an embodiment of the present invention to be described later can be modified into various other forms, and the scope of the present invention must not be interpreted as being restricted to the described embodiment. The embodiment is provided to more completely explain the present invention to those skilled in the art. In drawings, the thicknesses or sizes of layers or regions are exaggerated for clarity. Like reference numerals in the drawings denote the same members. Also, when it is written that a layer is formed "on" another layer or a substrate, the layer can be formed directly on the other layer or the substrate, or other layers can intervene therebetween.

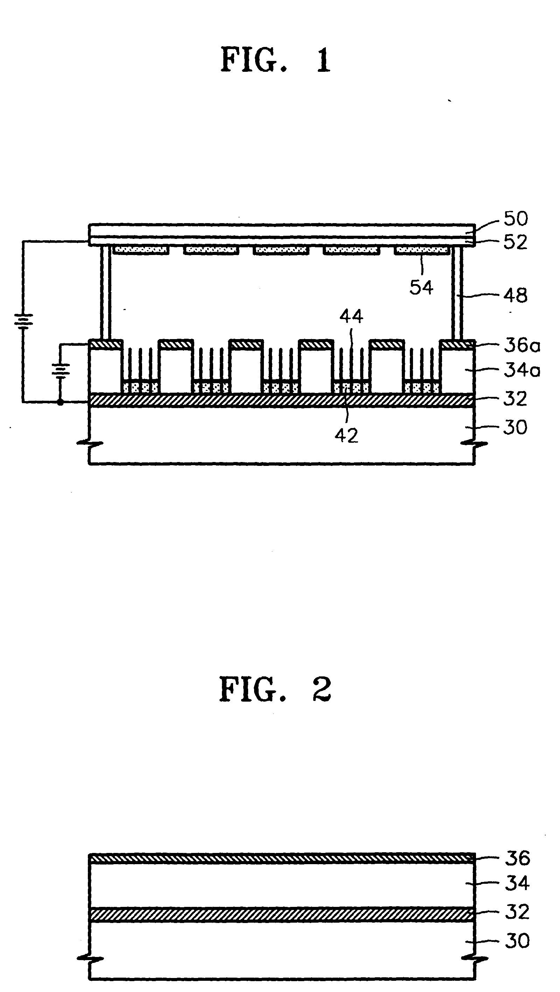

Referring to FIG. 1, a field emission display (FED) display using carbon nanotubes according to the present invention has a first metal film 32 for use as a cathode formed on a lower substrate 30. The lower substrate 30 is formed of glass quartz, silicon or alumina Al₂O₃. The first metal film 32 is formed of chrome, titanium, tungsten or aluminum. A dielectric film pattern 34a and a second metal film pattern 36a, each of which has a plurality of fine holes which expose the first metal film 32, are formed on the first metal film 32. The second metal film pattern 36a can be formed of chrome, titanium or palladium, and is used as a gate electrode in an FED device. The fine holes can be formed to have a diameter of 0.5 to 10.0 µm.

A conductive high polymer film 42 is formed within the fine holes, and carbon nanotubes 44 are arranged vertically within the conductive high polymer film 42. The carbon nanotubes 44 are used as emitter tips. These vertically-arranged carbon nanotubes 44 can obtain a great amount of emission current at a low operating voltage, for example, about 1.5V/µm. Also, the vertically-arranged carbon nanotubes 44 can increase luminous efficiency since they have a high density of tips per unit area. A spacer 48 is installed on the second metal film pattern 36a, and an upper substrate 50, to which a transparent electrode 52 for an anode and a fluorescent material 54 are attached, is provided on the spacer 48. An electric field is applied between the first metal film 32 serving as a cathode and the transparent electrode 52 serving as an anode, so that electrons are emitted from the vertically-arranged carbon nanotubes 44. The emitted electrons collide with the fluorescent material 54, so that the FED device having such a structure emits red, green and blue light. At this time, an electric field is applied between the second metal film pattern 36a for the gate electrode and the first metal film 32 for a cathode, so that electrons easily collide with the fluorescent material 54. Consequently, the FED device according to the present invention is a three-electrode FED device.

FIGS. 2 through 4 are cross-sectional views illustrating a method of manufacturing the FED display of FIG. 1. FIG. 2 illustrates the step of forming a first metal film 32, a dielectric film 34 and a second metal film 36 on a lower substrate 30. To be more specific the first metal film 32 serving as a cathode is formed to a thickness of 0.2 to 0.5 µm on the wide lower substrate 30. The lower substrate 30 is formed of glass, quartz, silicon or alumina (Al₂O₃). The first metal film 32 is formed of chrome, titanium, tungsten or aluminum. Next, the dielectric film 34 is formed to a thickness of 1 to 5 µm on the first metal film at a low temperature. Continuously, the second metal film 36 serving as a gate electrode is formed to a thickness of 0.2 to 0.5 µm on the dielectric film 34. The second metal film 36 is formed of chrome. titanium or palladium by an electron-beam deposition method or a thermal deposition method.

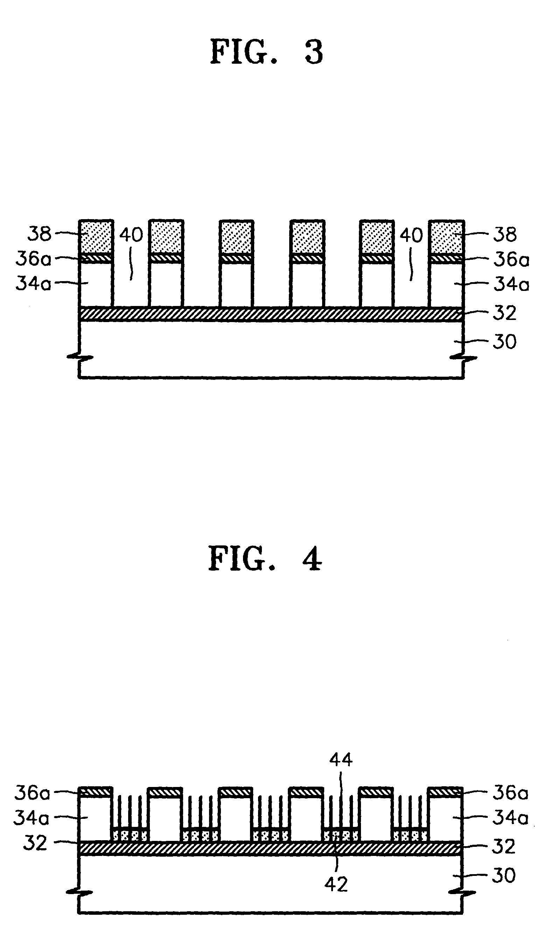

FIG. 3 illustrates the step of forming a second metal film pattern 36a and a dielectric film pattern 34a, each of which has fine holes 40, by patterning the second metal film 36 and the dielectric film 34. To be more specific, the second metal film 36 is coated with a photoresist film (not shown) having a thickness of 1.5 to 2.0 µm, and the photoresist film is developed, thereby forming a photoresist pattern 38. Next, the second metal film 36 and the dielectric film 34 are etched using the photoresist pattern 38 as a mask, thereby forming the second metal film pattern 36a and the dielectric film pattern 34a. Here, a plurality of fine holes 40 are formed to expose the first metal film 32. The fine holes 40 each have a diameter of about 0.5 to 10.0 µm, and are separated from each other at intervals of about 2.0 to 15.0 µm.

FIG. 4 illustrates the step of forming a conductive high polymer film 42 and positioning carbon nanotubes 44 within the fine holes 40. To be more specific, the conductive high polymer film 42 is formed by filling 1/3 of each of the fine holes 40 of the dielectric film 34 with liquid conductive high polymer. For example, the conductive high polymer can be a carbon adhesive or a silver adhesive.

Next, carbon nanotubes 44 for use as emitter tips are sprayed into the fine holes 40 by ultrasonic vibration, voltage impression, or the like, and are vertically oriented on the first metal film 32. In other words, after the carbon nanotubes 44 are sprayed on the fine holes 40, ultrasonic vibration is applied, a voltage is applied between the upper and lower portions of the lower substrate 30, or the two methods are both performed on the resultant structure. In this way, the carbon nanotubes are effectively injected and stood upright in the conductive high polymer film 42 within the fine holes 40. As a result, the carbon nanotubes 44 are vertically aligned in the conductive high polymer film 42 on the first metal film 32. The vertically-oriented carbon nanotubes 44 can obtain a great amount of emission current at a low operating voltage, for example, at about 1.5 V/µm. Also, the vertically-oriented carbon nanotubes 44 provide excellent luminous efficiency since they have a high density of tips per unit area.

Continuously, the liquid conductive high polymer film 42 on which the carbon nanotubes 44 have been sprayed is cured at 400°C or less, preferably, at 300 to 400°C.

Then, as shown in FIG. 1, a spacer 48 is installed to a length of about 100 to 700µm on the second metal film pattern 36a. Next, the transparent electrode 52 serving as an anode is formed on the upper substrate 50, and a fluorescent material 54, which emits light when bombarded by electrons, is then attached to the transparent electrode 52. A glass substrate is used as the upper substrate 50, and an indium tin oxide (ITO) electrode can be used as the transparent electrode.

Thereafter, the upper substrate 50 to which the transparent electrode 52 and the fluorescent material 54 are attached is turned upside down and put on the spacer 48, and then vacuum is sealed and mounted, thereby completing the formation of the FED device.

An FED device using carbon nanotubes according to the present invention as described above can be simply manufactured with a large area by a method of forming fine holes in a second metal film and a dielectric film, and putting carbon nanotube in the fine holes.

Also, the FED device according to the present invention can obtain a great amount of emission current at a low operating voltage, for example, at about 1.5V/µm, since it uses carbon nanotubes which is vertically oriented well as emitter tips. Also, the FED device according to the present invention provides excellent luminous efficiency, high reliability, and high yield since it has a high density of tips per unit area.

## Claims

1. A field emission display device comprising:
a first metal film for use as a cathode formed on a lower substrate;
a dielectric film pattern and a second metal film pattern formed on the first metal film, each of which has a plurality of fine holes which expose the first metal film;
a conductive high polymer film formed within the fine holes;
carbon nanotubes for use as emitter tips, vertically arranged within the conductive high polymer film;
a spacer installed on the second metal film pattern; and
an upper substrate to which a transparent electrode and a fluorescent material are attached, the upper substrate formed on the spacer.

2. The field emission display device of claim 1, wherein the lower substrate is formed of glass, quartz, silicon or alumina (Al₂O₃).

3. The field emission display device of claim 1, wherein the first metal film is formed of chrome, titanium, tungsten or aluminum, and the second metal film pattern is formed of chrome, titanium or palladium.

4. The field emission display device of claim 1, wherein each of the fine holes has a diameter of 0.5 to 10.0 µm.

5. A method of manufacturing a field emission display device, the method comprising:
forming a first metal film for use as a cathode on a lower substrate;
forming a dielectric film on the first metal film;
forming a second metal film for use as a gate electrode on the dielectric film;
forming a dielectric film pattern and a second metal film pattern, each of which has a plurality of fine holes which expose the first metal film, by patterning the second metal film and the dielectric film;
forming a liquid conductive high polymer film within the fine holes;
spraying carbon nanotubes for use as emitter tips into the fine holes and vertically arranging the carbon nanotubes;
curing the liquid conductive high polymer film;
installing a spacer on the second metal film pattern; and
attaching an upper substrate, having a transparent electrode and a fluorescent material attached thereto, to the spacer.

6. The method of claim 5, wherein the lower substrate is formed of glass, quartz, silicon or alumina (Al₂O₃).

7. The method of claim 5, wherein the first metal film is formed of chrome, titanium, tungsten or aluminum, and the second metal film is formed of chrome, titanium or palladium.

8. The method of claim 5, wherein the carbon nanotubes are stood upright within the fine holes by ultrasonic vibration or voltage impression.

9. The method of claim 5, wherein each of the fine holes has a diameter of 0.5 to 10.0 µm.

10. The method of claim 5, wherein the liquid conductive high polymer film is cured at 300 to 400°C.
